# EUROPÄISCHE PATENTSCHRIFT

(11) **EP 3 213 963 B1**
(45) Veröffentlichungstag und Bekanntmachung des Hinweises auf die Patenterteilung: **17.10.2018**
(21) Anmeldenummer: 17158851.0
(22) Anmeldetag: 02.03.2017
(51) Int. Cl.: B60R 1/00, B60Q 1/26, B60Q 1/32

(54) **FAHRZEUG MIT KAMERAEINRICHTUNG UND AUSSENLICHTANLAGE**
VEHICLE WITH CAMERA DEVICE AND EXTERNAL LIGHT ASSEMBLY
VÉHICULE COMPRENANT UN DISPOSITIF DE CAMÉRA ET INSTALLATION D'ÉCLAIRAGE EXTÉRIEUR

(30) Priorität: 03.03.2016 DE 102016002590
(43) Veröffentlichungstag der Anmeldung: 06.09.2017
(73) Patentinhaber: Audi AG, 85045 Ingolstadt (DE)
(72) Erfinder: Lendle, Reiner, 74855 Haßmersheim (DE)

(56) Entgegenhaltungen:
- DE-A1-102014 209 863
- FR-A1- 2 983 438
- US-A- 4 692 798
- US-A1- 2009 295 906
- US-A1- 2011 242 320

## Beschreibung

Die vorliegende Erfindung betrifft ein Fahrzeug mit einer Kameraeinrichtung und einer Außenlichtanlage.

Kraftfahrzeuge weisen regelmäßig wenigstens einen Außenspiegel auf der Fahrerseite auf. In vielen Ländern ist darüber hinaus ein zweiter Außenspiegel auf der Beifahrerseite üblich oder erforderlich. Bei Kraftfahrzeugen, bei denen eine Sicht durch eine Heckscheibe gegeben oder möglich ist, ist darüber hinaus regelmäßig auch ein innerer Rückspiegel vorgesehen.

Seit längerem gibt es Bestrebungen, einen, mehrere oder alle Spiegel eines Kraftfahrzeugs durch (ein) Kamera-Display-System(e) zu ersetzen, die Funktionalität dieser Spiegel durch (ein) Kamera-Display-System(e) zu erweitern, durch (ein) Kamera-Display-System(e) dem Fahrer eine im Vergleich zu bisher verwendeten Spiegeln erweiterte/verbesserte Sicht bezüglich einer Fahrzeugumgebung zu ermöglichen und/oder Daten derartiger Kamera-Systeme auch für ein Fahrerassistenzsystem zu verwenden.

So beschreibt etwa die DE 10 2007 039 875 A1 den Ersatz des Außenspiegels eines Kraftwagens durch eine Digitalkamera. Hierzu wird in der seitlichen Außenkarosserie eines Kraftwagens anstatt eines Außenspiegels ein rückwärts gerichtetes Kameraobjektiv und ein rückwärts gerichteter Bildsensor integriert und die Bilddaten zu einem in Innenraum des Kraftwagens angeordneten Monitor geleitet, welcher im Fahrersichtfeld angebracht ist. Die Einstellung und die Ausrichtung des Kameraobjektivs werden vom Autoinnenraum aus betätigt. Daneben beschreibt diese Offenlegungsschrift auch die Anordnung eines Kameraobjektivs und eines Bildsensors einer Digitalkamera am Heck des Kraftwagens zur Erkennung von Hindernissen beim Rückwärtsfahren. Auch die Daten dieser Kameraeinrichtung werden zu einem in Innenraum des Kraftwagens angeordneten Monitor geleitet.

Aus der DE 10 2007 032 527 A1 ist eine Bildverarbeitungsanordnung bekannt, die zumindest eine am Kraftfahrzeug angeordnete Kamera zum Erfassen von Bildern der Fahrzeugumgebung, eine mit der Kamera gekoppelte elektronische Einrichtung zum Verarbeiten von Bildern und zumindest eine mit der Einrichtung gekoppelte Bildanzeigeeinrichtung zum Darstellen von Bildern umfasst. Die Bildanzeigeeinrichtung ist an einem einem Fahrgastinnenraum eines Kraftfahrzeugs zugewandten Bereich der A-Säule angeordnet.

Die DE 10 2010 005 638 A1 hat ein Verfahren zum Anzeigen zumindest eines Bildes einer Fahrzeugumgebung auf einer Anzeigeeinrichtung in einem Fahrzeug zum Gegenstand, bei welchem eine Kamera an oder in einem Außenspiegel des Fahrzeugs zur Aufnahme von Bildern der Fahrzeugumgebung angeordnet wird, wobei der Außenspiegel gegenüber einer Fahrzeugkarosserie zwischen zumindest zwei Stellungen bewegbar ist. Es wird über eine gegenüber einer ersten Stellung veränderte zweite Stellung des Außenspiegels erfasst, und das in der zweiten Stellung des Außenspiegels durch die Kamera aufgenommene Bild wird abhängig von der zweiten Stellung relativ zur ersten Stellung gedreht. Es wird zumindest ein Bildausschnitt aus dem gedrehten Bild auf der Anzeigeeinrichtung angezeigt.

Auch die DE 10 2012 003 561 A1 und die DE 10 2014 111 067 A1 beschreiben u.a. einen Außenspiegel mit einer darin angeordneten Kamera, wobei eine Änderung der Ausrichtung der Kamera durch eine Verstellung des Außenspiegels erfolgt.

Die DE 10 2013 001 276 A1 beschreibt ein Verfahren zur Steuerung eines Abbiegelichts in einem Kraftfahrzeug, bei dem ein in einem Totwinkelbereich befindlicher Verkehrsteilnehmer durch eine Erfassungsvorrichtung, etwa durch eine Kamera, erfasst und ein Abbiegelicht auf der Seite, auf der sich der Verkehrsteilnehmer befindet, intermittierend aktiviert wird, wobei eine Frequenz, mit der das Abbiegelichts an- und ausgeschaltet wird, an mindestens einen vordefinierten Parameter angepasst wird.

Aus der US 2011/0242320 A1 ist ein Bildanzeigesystem bekannt, das bspw. mittels vier am Fahrzeug angeordneten Kameras (Frontkamera, Rückfahrkamera und zwei im Bereich der Außenspiegel vorgesehenen Kameras) ein zusammengesetztes Bild der Fahrzeugumgebung aus einer virtuellen Aufnahmeposition auf einem fahrzeugseitigen Bildschirm anzeigen kann. Eine Fahrzeugumgebung kann, etwa bei zu geringer Umgebungshelligkeit, mittels eines unterstützenden Lichtsystems angeleuchtet werden. Ist eine solche Unterstützung erforderlich, wird das auf dem fahrzeugseitigen Bildschirm angezeigte Bild auf den mittels des unterstützenden Lichtsystems angeleuchteten Umgebungsbereich beschränkt, wodurch der angeleuchtete Umgebungsbereich auf dem Bildschirm größer als vorher angezeigt wird.

Und die DE 100 30 359 A1 hat ein Verfahren zur dynamischen Steuerung der Hintergrundbeleuchtung der Displays eines in einem Kraftfahrzeug angeordneten Kamera-Display-Systems zum Gegenstand. Das Kraftfahrzeug ist mit drei Kameras für das Erfassen der Bilder für die beiden Außenspiegel und für den Rückspiegel ausgestattet und mit einer weiteren, nach vorn gerichteten Kamera für die Ermittlung der mittleren Umgebungshelligkeit. Die Steuerung der Hintergrundbeleuchtung der Displays erfolgt in Abhängigkeit der Beleuchtungssituationen.

Neben den oben erwähnten Spiegeln bzw. Spiegel-Ersatzsystemen weisen Kraftfahrzeuge regelmäßig auch eine Fahrzeugaußenlichtanlage auf. Die Fahrzeugaußenlichtanlage umfasst regelmäßig Scheinwerfereinrichtungen zur Beleuchtung eines dem Kraftfahrzeug vorausliegenden Umgebung (mit bspw. den Lichtfunktionen Abblendlicht und Fernlicht) und Fahrzeugleuchten, durch die das Kraftfahrzeug bei Dämmerung, Dunkelheit oder bei schlechten Witterungsverhältnissen von Dritten besser wahrgenommen werden kann und durch die bestimmte aktuelle (bspw. Bremsvorgang) oder beabsichtigte (bspw. Fahrspurwechsel, Abbiegevorgang) Fahrmanöver angezeigt werden können.

Zu den Fahrzeugleuchten zählen etwa Standlicht, Parklicht, Fahrtrichtungsanzeiger, Schlussleuchte, Bremsleuchte, Nebelschlussleuchte, Tagfahrlicht, Kennzeichenbeleuchtung, Seitenmarkierungsleuchten, etc.

Fahrzeugleuchten können einzeln in vergleichsweise kompakten Gehäusen angeordnet sein, bspw. in Form einer diskreten Blinkleuchte (zur Erzeugung eines Fahrtrichtungsanzeige-Lichts), die etwa im Bereich eines Kotflügels, einer Stoßstange oder eines Außenspiegels angeordnet ist. Daneben sind diverse Scheinwerfer/Fahrzeugleuchten-Kombinationen bekannt, bspw. die Anordnung von Fahrtrichtungsanzeiger, Standlicht/Parklicht, Abblendlicht und Fernlicht in einem gemeinsamen Gehäuse oder eine Kombination aus Fahrtrichtungsanzeiger, Schlussleuchte, Bremsleuchte, Nebelschlussleuchte und Rückfahrscheinwerfer in einem gemeinsamen Gehäuse.

Aus der US 2009/0295906 A1 ist eine an einer Seite eines Fahrzeugs, gemäß dem Oberbegriff des Anspruchs 1, angeordnete Kamera bekannt, die ausgebildet ist durch eine Facettenaugen-artige, bildgebende Einrichtung und eine Beleuchtungseinrichtung für nahes Infrarotlicht, die in einem Gehäuse einer Fahrtrichtungsanzeige-Leuchte angeordnet sind. Die Facettenaugen-artige, bildgebende Einrichtung weist 6 bildgebende Einheiten in 2 Reihen und 3 Spalten auf. Drei bildgebende Einheiten in einer Reihe sind mit einem Infrarot-Filter versehen. Die bildgebenden Einheiten in den rechten und linken Spalten sind mit rechtwinkeligen Prismen versehen, um die Lichteintrittszonen nach links und rechts zu verschieben. Ein Mikroprozessor schaltet die Beleuchtungseinrichtung für nahes Infrarotlicht während des Tages aus, um Bilder von den 3 bildgebenden Einheiten mit dem Infrarot-Filter zu einem Panoramabild zu kombinieren, und schaltet die Beleuchtungseinrichtung für nahes Infrarotlicht für eine Bildaufnahme bei Nacht ein, um Bilder von den 3 bildgebenden Einheiten ohne Infrarot-Filter zu einem Panoramabild zu kombinieren. Ist die Fahrtrichtungsanzeige-Leuchte, die eine LED aufweisen und getaktet angesteuert werden kann, eingeschaltet, erfolgen die Bildaufnahmen zur Vermeidung von unklaren Bildern immer dann, wenn sich die LED in einem ausgeschalteten Zustand befindet.
Weiter sind längsförmige Fahrzeugleuchten bekannt, die an einem Kraftfahrzeug angeordnet sind (bspw. auf der Karosserie, bündig mit der Karosserie oder unter der Karosserie, sofern das Karosseriebauteil an den entsprechenden Stellen lichtdurchlässig ist) und die bspw. als Seitenmarkierungsleuchte (Sidemarker), Umrissleuchte oder Fahrtrichtungsanzeige (Blinklicht) dienen können. Derartige Fahrzeugleuchten, die bspw. eine Länge von 1 Meter, 2 Meter, 3 Meter oder mehr aufweisen können, und deren Aufbau sind bspw. Gegenstand der DE 10 2012 003 200 A1 und der DE 10 2013 007 856 A1.
Auch sind Fahrzeuge bekannt, bei denen mit Hilfe von Scheinwerfereinrichtungen, Bildaufnahmevorrichtungen und Anzeigevorrichtungen die Sicht eines Fahrzeuglenkers auf die dem Fahrzeug vorausliegende Umgebung verbessert werden soll.

So beschreibt etwa die US 4,692,798 A eine Vorrichtung zum Verbessern der Sichtbarkeit von Objekten innerhalb des Sichtfeldes eines Fahrzeuglenkers. Die Vorrichtung umfasst eine Lichtabstrahlvorrichtung, die intensives, sichtbares Licht in Richtung eines reflektierenden Objekts mit einer Frequenz abstrahlt, die nicht niedriger als die kritische Verschmelzungsfrequenz ist, eine Bildaufnahmevorrichtung, die ein Bild des Objekts aufnimmt und entsprechende Bilddaten ausgibt, einen Bilddatenverstärker, einen Bildsignal-Generator und eine Anzeigevorrichtung. Die Bilddaten werden verarbeitet um ein Bildsignal zu erzeugen, das ein klares Bild des Objekts auf der Anzeigevorrichtung erzeugt. Die Vorrichtung kann dem Fahrzeuglenker ein klares Bild von den Objekten im vorausliegenden Blickfeld des Fahrzeugs zur Verfügung stellen, ohne die Fahrzeuglenker auf der gegenüberliegenden Fahrbahn zu blenden.
Es ist Aufgabe der vorliegenden Erfindung, ein Fahrzeug zur Verfügung zu stellen, mit dem für einen Fahrzeuginsassen, insbesondere einen Fahrzeugführer eine im Vergleich zum Stand der Technik verbesserte Ansicht einer Fahrzeugumgebung durch eine Anzeigeeinrichtung ermöglicht wird. Diese Aufgabe wird gelöst durch das Fahrzeug gemäß Anspruch 1 oder Anspruch 2. Vorteilhafte Weiterbildungen und Ausgestaltungen der Erfindung sind Gegenstand der Unteransprüche.
Die vorliegende Erfindung geht aus von einem Fahrzeug mit einer fahrzeugseitigen Außenlichtanlage, die eine Halbleiterlichtquelle aufweist und der eine Halbleiterlichtquellen-Steuereinrichtung zugeordnet ist, mittels der die Halbleiterlichtquelle zur Lichtabstrahlung getaktet angesteuert wird, einer Kameraeinrichtung zur Erfassung von Bildern in zeitlicher Abfolge von einem Bereich einer Fahrzeugumgebung, der eine Kamerasteuereinrichtung zugeordnet ist, die in kommunikativer Verbindung mit der Halbleiterlichtquellen-Steuereinrichtung steht, sowie einer Anzeigeeinrichtung für die von der Kameraeinrichtung erfassten Bilder.
Das Fahrzeug dadurch gekennzeichnet, dass
a) von der Kameraeinrichtung der lichtabstrahlende Teil der fahrzeugseitigen Außenlichtanlage zumindest teilweise erfasst wird, und,
b) die Kamera-Steuereinrichtung dazu eingerichtet ist,
b1) den Zeitpunkt und die Zeitdauer einer jeden Aufnahme eines Bildes der Kameraeinrichtung in Abhängigkeit von einem Fahrerwunsch und/oder einer Umgebungshelligkeit im Bereich des Fahrzeugs derart zu steuern, dass bei einer eingeschalteten Außenlichtanlage jede Aufnahme jedes Bildes derart synchron zur Ansteuerung der Halbleiterlichtquelle erfolgt, dass
   - jede Aufnahme jedes Bildes während eines eingeschalteten Zustands der Halbleiterlichtquelle erfolgt, so dass das Licht des von der Kameraeinrichtung erfassten, lichtabstrahlenden Teils der Außenlichtanlage in den an die Anzeigeeinrichtung übertragenen Bildern heller erscheint, als dies bei integrierter Betrachtung mit dem Auge der Fall ist; oder
   - jede Aufnahme jedes Bildes während eines ausgeschalteten Zustands der Halbleiterlichtquelle erfolgt, so dass die Außenlichtanlage in den auf die Anzeigeeinrichtung übertragenen Bildern als ausgeschaltete Außenlichtanlage erscheint; oder
   - ein erster vorgebbarer Anteil der Zeitdauer jeder Aufnahme jedes Bildes mit einem eingeschalteten Zustand und ein zweiter, vorgebbarer, restlicher Anteil der Zeitdauer jeder Aufnahme jedes Bildes mit einem ausgeschalteten Zustand der Halbleiterlichtquelle zusammenfällt, so dass das Licht des von der Kameraeinrichtung erfassten, lichtabstrahlenden Teils der Außenlichtanlage in den an die Anzeigeeinrichtung übertragenen Bildern gleich hell erscheint, wie dies bei integrierter Betrachtung mit dem Auge der Fall ist; oder
   - jede Aufnahme jedes Bildes zu einem vorgebbaren Zeitpunkt beginnt und über eine vorgebbare Zeitdauer erfolgt, bei der die Gesamtdauer der eingeschalteten Zustände der Halbleiterlichtquelle größer ist als die Gesamtdauer der ausgeschalteten Zustände der Halbleiterlichtquelle, so dass das Licht des von der Kameraeinrichtung erfassten, lichtabstrahlenden Teils der Außenlichtanlage in den an die Anzeigeeinrichtung übertragenen Bildern heller erscheint, als dies bei integrierter Betrachtung mit dem Auge der Fall ist; oder
   - jede Aufnahme jedes Bildes zu einem vorgebbaren Zeitpunkt beginnt und über eine vorgebbare Zeitdauer erfolgt, bei der die Gesamtdauer der eingeschalteten Zustände der Halbleiterlichtquelle kleiner ist als die Gesamtdauer der ausgeschalteten Zustände der Halbleiterlichtquelle, so dass das Licht des von der Kameraeinrichtung erfassten, lichtabstrahlenden Teils der Außenlichtanlage in den an die Anzeigeeinrichtung übertragenen Bildern dunkler erscheint, als dies bei integrierter Betrachtung mit dem Auge der Fall ist.

Aktuell kommen in Fahrzeugen zum Blick nach hinten und zur Seite im Wesentlichen herkömmliche Spiegel zum Einsatz. Diese Spiegel geben ein mehr oder weniger exaktes Abbild der Umgebung wieder, ihre Funktion kann aber nicht gesteuert werden. Sofern Kameraeinrichtungen, etwa als virtuelle Außenspiegel vorgesehen sind, werden diese unabhängig von der Beleuchtung des Fahrzeugs angesteuert. Durch konventionelle Spiegel oder "herkömmliche" virtuelle Außenspiegel wird die Umgebung somit "ungefiltert" wiedergegeben. Teilweise, vor allem bei Einsatz von Kameraeinrichtungen werden Helligkeitsunterschiede sogar noch verstärkt. Dies führt zu schlechtem Erkennen von bestimmten Bildbereichen und Objekten.

Die vorliegende Erfindung beruht auf der Erkenntnis des Erfinders, dass dieser Nachteil des Stands der Technik überwunden oder doch erheblich gemildert werden kann durch das Vorsehen einer Außenlichtanlage bei einem Fahrzeug, die eine Halbleiterlichtquelle aufweist, die getaktet angesteuert wird, und durch die Abstimmung der Bildfrequenz der wenigstens einen für die Realisierung eines "virtuellen" Spiegels zum Einsatz kommenden Kameraeinrichtung mit der Frequenz der Ansteuerung der Halbleiterlichtquelle der Außenlichtanlage.

Leuchtet bspw. die Außenlichtanlage immer dann, wenn durch die Kameraeinrichtung kein Bild aufgenommen wird, und ist die Außenlichtanlage immer dann ausgeschaltet, wenn durch die Kameraeinrichtung ein Bild aufgenommen wird, dann ist die Außenlichtanlage auf den zur Anzeigeeinrichtung übertragenen Bildern (Monitorbild) für einen Fahrer nicht sichtbar und verursacht somit keine Ablenkung oder Sichtbeeinträchtigung für den Fahrer.

Neben der vollständigen Ausblendung der Lichtquelle der Außenlichtanlage durch eine entsprechende Abstimmung zwischen den Aufnahmen der Kameraeinrichtung und der Ansteuerung der Lichtquelle können erfindungsgemäß durch andere Taktraten und/oder andere Überlappungen auch eine Reduzierung der Helligkeit der Lichtquelle auf dem Monitorbild erreicht werden, oder die Lichtquelle heller erscheinen, als dies bei integrierter Betrachtung mit dem Auge der Fall wäre.

Es ist zu erwarten, dass Außenlichtanlagen, mit denen bspw. die Kontur eines Fahrzeugs betont werden kann, um gerade bei Nacht Fahrzeuge besser erkennen zu können, zukünftig verstärkt zum Einsatz kommen werden. Auch ist es denkbar, die komplette Fahrzeugaußenhaut (selbst)leuchtend auszuführen. Derartige Außenlichtanlagen haben einen erheblichen Einfluss auf den Inhalt dessen, was ein Fahrer auf einer Anzeigeeinrichtung einer virtuellen Spiegeleinrichtung sehen bzw. erkennen kann.

Durch die erfindungsgemäß mögliche Anpassung der Belichtung durch die Kameraeinrichtung können die mit derartigen Außenlichtanlagen verbundenen Nachteile vermieden oder doch stark verringert werden.

Eine weitere erfindungsgemäße Möglichkeit zur Überwindung oder doch Verringerung des Eingangs genannten Problems stellt ein Fahrzeug dar, das dadurch gekennzeichnet ist, dass die Kamera-Steuereinrichtung alternativ zu
b1) dazu eingerichtet ist,
b2) Bilder der Kameraeinrichtung asynchron zum Takt der Ansteuerung der Halbleiterlichtquelle zu erfassen und die Daten der Bilder der Kameraeinrichtung, die in einem eingeschalteten Zustand der fahrzeugseitigen Außenlichtanlage aufgenommen werden, in Abhängigkeit von einem Fahrerwunsch und/oder einer Umgebungshelligkeit derart zu bearbeiten, dass in den an die Anzeigeeinrichtung übertragenen bearbeiteten Bildern das von der fahrzeugseitigen Außenlichtanlage abgestrahlte Licht heller, gleichhell oder
   dunkler erscheint, als bei einer integrierten Betrachtung mit einem menschlichen Auge, oder als ausgeschaltete Außenlichtanlage erscheint.

Durch eine Aufnahme von Bildern durch die Kameraeinrichtung, die asynchron zum Takt der Ansteuerung der Halbleiterlichtquelle erfolgt, ist gewährleistet, dass auf zumindest einem Teil der erfassten Bilder die Außenlichtanlage in einem Licht abstrahlenden Zustand erfasst wird. Die so erhaltenen Bilder können dann mittels an sich bekannter Verfahren (bspw. mittels eines oder mehrerer Bildverarbeitungsprogramme, die auf einer fahrzeugseitigen digitalen Recheneinrichtung ablauffähig installiert sind) so optimiert oder bearbeitet werden, dass der jeweils gewünschte optische Effekt entsteht. So kann etwa innerhalb der Bilder der Bereich der Außenlichtanlage abgedunkelt oder aufgehellt werden.

Die Art und Weise der Aufnahme der Bilder und die Art und Weise der Darstellung der Außenlichtanlage bzw. des von der Außenlichtanlage abgestrahlten Lichts in den an die Anzeigeeinrichtung übermittelten Bilder ist abhängig von wenigstens einem vorgegebenen oder vorgebbaren Parameter. Als ein solcher Parameter ist erfindungsgemäß ein Fahrerwunsch und/oder eine Umgebungshelligkeit im Bereich des Fahrzeugs vorgegeben oder vorgebbar.

Ein Fahrer (allgemeiner ausgedrückt: Fahrzeugführer) kann bspw. mittels einer Betätigungseinrichtung (etwa einem Drehsteller, einem Schieberegler, einer virtuellen Betätigungseinrichtung auf einem berührungsempfindlichen Display, etc.) die Art der Anzeige auf der Anzeigeeinrichtung verändern, bspw. die Anzeige des lichtabstrahlenden Teils der Außenlichtanlage in den angezeigten Bildern heller oder dunkler einstellen. Hierdurch kann bewirkt werden, dass durch die Kamera-Steuereinrichtung die Art und Weise der Aufnahme der Bilder durch die Kameraeinrichtung verändert wird (gemäß den oben beschriebenen verschiedenen Möglichkeiten) oder dass die Art und Weise der Verarbeitung der Bilder durch die Bildverarbeitung entsprechend angepasst wird.

Alternativ oder ergänzend zu einem Fahrerwunsch kann als Parameter auch eine Umgebungshelligkeit bei der vorliegenden Erfindung berücksichtigt werden. In einem solchen Fall weist das Fahrzeug eine Einrichtung zur Erfassung einer Umgebungshelligkeit auf. Als eine solche Einrichtung kann bspw. die Kameraeinrichtung selbst dienen, es kann eine der Kameraeinrichtung zugeordnete Einrichtung sein, eine zweite Kameraeinrichtung oder eine an sich bekannte Einrichtung zur Lichtmessung. Für besonders gute Ergebnisse kann es von Vorteil sein, wenn die Umgebungshelligkeit in dem Bereich der Umgebung berücksichtigt wird, der auch von der Kameraeinrichtung erfasst wird. Daneben ist es selbstverständlich von der vorliegenden Erfindung umfasst, eine Umgebungshelligkeit zu berücksichtigen, die bspw. durch eine im Dachbereich des Fahrzeugs angeordnete Einrichtung erfasst wird, auch wenn durch die Kameraeinrichtung ein Bereich seitlich, seitlich-hinter, hinter oder vor dem Fahrzeug erfasst wird.

Die Berücksichtigung der Umgebungshelligkeit als Parameter ist hilfreich, da bspw. in einer dunklen Umgebung (etwa bei Nacht) die Außenlichtanlage oftmals eingeschaltet (etwa als Sidemarker oder als Umrisslicht) und das von der Außenlichtanlage abgestrahlte Licht deutlich heller ist als die Umgebungshelligkeit. In einem solchen Fall kann es vorteilhaft sein, die Bilder in einem ausgeschalteten Zustand der Halbleiterlichtquelle aufzunehmen oder die Außenlichtanlage in den durch die Anzeigeeinrichtung angezeigten Bildern als ausgeschaltete Außenlichtanlage darzustellen, um so eine gute Erkennbarkeit der übrigen, von der Kameraeinrichtung erfassten Umgebung zu gewährleisten.

Bei einer großen Umgebungshelligkeit (etwa tagsüber bei Sonnenschein) kann es dagegen von Vorteil sein, die Bilder in einem eingeschalteten Zustand der Halbleiterlichtquelle aufzunehmen oder die Helligkeit des von der Außenlichtanlage abgestrahlten Lichts in den durch die Anzeigeeinrichtung angezeigten Bildern heller darzustellen, als dies tatsächlich der Fall ist, da anderenfalls in den angezeigten Bildern ein eingeschalteter Zustand der Außenlichtanlage nicht erkennbar sein kann.

Somit kann es von Vorteil sein, eine gegebene Umgebungshelligkeit in einer Fahrzeugumgebung derart zu berücksichtigen, dass
c1) unterhalb einer ersten vorgebbaren Umgebungshelligkeit die Aufnahme ein jedes Bildes während eines ausgeschalteten Zustands der wenigstens einen Halbleiterlichtquelle erfolgt, oder c2) in den an die Anzeigeeinrichtung übertragenen bearbeiteten Bildern die wenigstens eine eingeschaltete, fahrzeugseitige Außenlichtanlage als ausgeschaltete Außenlichtanlage erscheint;
d1) ab der ersten vorgebbaren Umgebungshelligkeit und bis zu einer zweiten vorgebbaren Umgebungshelligkeit, die größer ist als die erste vorgebbare Umgebungshelligkeit, ein erster vorgebbarer Anteil der Zeitdauer jeder Aufnahme jedes Bildes mit einem eingeschalteten Zustand und ein zweiter, vorgebbarer, restlicher Anteil der Zeitdauer jeder Aufnahme jedes Bildes mit einem ausgeschalteten Zustand der wenigstens einen Halbleiterlichtquelle zusammenfällt, oder d2) in den an die Anzeigeeinrichtung übertragenen bearbeiteten Bildern das von der fahrzeugseitigen Außenlichtanlage abgestrahlte Licht gleichhell oder dunkler erscheint, als bei einer integrierten Betrachtung mit einem menschlichen Auge; und
e1) ab der zweiten vorgebbaren Umgebungshelligkeit und einer Umgebungshelligkeit, die größer ist als die zweite vorgebbare Helligkeit, jede Aufnahme jedes Bildes während eines eingeschalteten Zustands der wenigstens einen Halbleiterlichtquelle erfolgt, oder e2) in den an die Anzeigeeinrichtung übertragenen bearbeiteten Bildern das von der fahrzeugseitigen Außenlichtanlage abgestrahlte Licht heller erscheint, als bei einer integrierten Betrachtung mit einem menschlichen Auge.

Was als erste und zweite Umgebungshelligkeit gewählt ist, unterliegt keiner besonderen Einschränkung und es kann jeweils eine geeignete Umgebungshelligkeit gewählt werden. So kann bspw. als erste Umgebungshelligkeit ein Wert aus dem Bereich von 0 bis 0,25 Lux gewählt werden und als zweite Umgebungshelligkeit ein Wert aus dem Bereich von 50 bis 5000 Lux. Es sei hier nochmals ausdrücklich darauf hingewiesen, dass es sich bei diesen Werten lediglich um beispielhafte Werte handelt und dass ein Fachmann für den jeweiligen Anwendungsfall andere geeignete Helligkeitswerte wählen wird.

Das Fahrzeug gemäß der vorliegenden Erfindung kann in vorteilhafter Weise auch dahin weitergebildet sein, dass
- die Kamera-Steuereinrichtung dazu eingerichtet ist, die Kameraeinrichtung derart zu steuern, dass diese alternierend überbelichtete und unterbelichtete Bilder von dem Bereich in der Fahrzeugumgebung erfasst, und
- die Kamera-Steuereinrichtung weiter dazu eingerichtet ist, jeweils zwei der alternierend aufgenommenen Bilder zu einem gemeinsamen Bild derart zusammenzufügen, dass sich in dem gemeinsamen Bild im Vergleich zu einem einzelnen, korrekt belichteten Bild ein erhöhter Dynamikumfang ergibt.

Derzeit verfügbare Bildsensoren verfügen nur über einen beschränkten Dynamikbereich, in dem dunkle Bildbereich und helle Bildbereiche noch differenziert dargestellt werden können. Außerhalb dieser Bereiche werden dunkle Bildbereiche nur noch als schwarze Flächen und helle Bereiche nur noch als weiße Flächen erfasst. Bei einem unterbelichteten Bild sind im Vergleich zu einem normal belichteten Bild auch in hellen Bildbereichen noch Bilddetails erkennbar, und bei einem überbelichteten Bild dementsprechend Bilddetails auch noch in dunklen Bildbereichen. Durch eine Kombination der entsprechenden Bildbereiche eines unterbelichteten und eines überbelichteten Bildes kann somit ein noch realistischeres Abbild der von der Kameraeinrichtung erfassten Umgebung des Fahrzeugs auf einer Anzeigeeinrichtung erzeugt werden.

Verfügt die Kameraeinrichtung des Fahrzeugs nur über eine Kamera, so können eine überbelichtetes und ein unterbelichtetes Bild in möglichst kurzem Zeitabstand hintereinander aufgenommen werden, so dass aufgrund einer Bewegung des Fahrzeugs und/oder von Objekten in der erfassten Umgebung des Fahrzeugs die Bilder, was deren Inhalt betrifft, nur geringe Unterschiede aufweisen. Diese Unterschiede können dann mittels einer geeigneten Bildbearbeitungssoftware zur Deckung gebracht werden.

Es kann jedoch auch vorgesehen sein, dass die Kameraeinrichtung zwei Kameras aufweist, mittels welcher zeitgleich Bilder vom gleichen Bereich in einer Fahrzeugumgebung erfasst werden können. In einem solchen Fall kann die Kamera-Steuereinrichtung dazu eingerichtet sein, mittels einer der Kameras überbelichtete Bilder aufzunehmen und mittels der anderen Kamera unterbelichtete Bilder aufzunehmen. In einem solchen Fall besteht dann regelmäßig keine Notwendigkeit, inhaltliche Unterschiede zwischen den Bildern zur Deckung bringen zu müssen.

Der Bereich der Fahrzeugumgebung, der von der Kameraeinrichtung erfasst werden kann, unterliegt keiner besonderen Beschränkung. Mittels der Kameraeinrichtung kann bspw. ein Bereich in der Fahrzeugumgebung erfassbar sein, der sich seitlich und seitlich-rückwärtig in Bezug auf das Fahrzeug erstreckt, der also dem eines herkömmlichen Außenspiegels entspricht.

Die vorliegende Erfindung ist selbstverständlich nicht hierauf beschränkt. So kann etwa mittels der Kameraeinrichtung/den Kameraeinrichtungen (auch) ein Bereich im Vorfeld des Fahrzeugs erfasst werden und/oder (auch) ein Bereich hinter dem Fahrzeug. Auch kann vorgesehen sein, dass auf Grundlage von Bildern von einer oder mehreren Kameras auf der Anzeigeeinrichtung eine Fahrzeugumgebung aus einer virtuellen Kameraposition angezeigt wird (etwa als "Top View Ansicht").

Sofern in der vorliegenden Anmeldung davon gesprochen wird, dass die Halbleiterlichtquellen-Steuereinrichtung dazu eingerichtet ist, die wenigstens eine Halbleiterlichtquelle der Außenlichtanlage "getaktet anzusteuern", so ist darunter in bevorzugter Weise eine dem Fachmann bekannte Pulslängenmodulation zu verstehen.

Bei dem Fahrzeug gemäß der vorliegenden Erfindung weist die wenigstens eine Halbleiterlichtquelle der fahrzeugseitigen Außenlichtanlage vorzugsweise eine oder mehrere Lichtemittierende Dioden, eine oder mehrere RGB-Dioden und/oder eine oder mehrere Laserdioden auf.

Derartige Halbleiterlichtquellen können in schneller Folge an und ausgeschaltet werden, wobei das An- und Ausschalten für das menschliche Auge ab einer gewissen gewählten Frequenz nicht mehr erkennbar ist. Die sogenannte Flimmerverschmelzungsfrequenz liegt bei niedriger Lichtintensität bei etwa 25 Hz und steigt mit zunehmender Lichtintensität und Flächenverteilung an.

Die wenigstens eine Halbleiterlichtquelle kann somit mit einer Frequenz von 25 Hz oder höher, bspw. mit 50Hz, 75Hz, 100 Hz, 125 Hz, 150 Hz, 175 Hz, 200 Hz, 225 Hz, 250 Hz, 300 Hz, 350 Hz, 400 Hz oder höher getaktet angesteuert werden. Da bei einer größeren Lichtintensität die Flimmerverschmelzungsfrequenz in Abhängigkeit von der Flächenverteilung der Lichtintensität auch 80 Hz oder 90 Hz betragen kann, ist es in einem solchen Fall von Vorteil, wenn die getaktete Ansteuerung der Halbleiterlichtquelle mit wenigstens einer solchen Frequenz erfolgt.

Die Helligkeit einer Halbleiterlichtquelle ergibt sich durch den durch sie hindurchfließenden elektrischen Strom. Die Größe des fließenden elektrischen Stroms ist abhängig von der Pulsbreite (Pulslänge) innerhalb einer Periode (Frequenz). Somit kann durch eine Variation der Pulsbreite (bei gegebener Versorgungsspannung) die für einen Menschen wahrnehmbare Helligkeit einer Halbleiterlichtquelle variiert werden.

Gemäß einer weiteren vorteilhaften Weiterbildung des Fahrzeugs ist vorgesehen, dass die fahrzeugseitige Außenlichtanlage eine längsförmige Beleuchtungseinrichtung ist, die sich bspw. entlang von wenigstens einem Teil der Längsseite des Fahrzeugs erstrecken kann. Die Außenlichtanlage kann in vorteilhafter Weise die Funktion einer Seitenmarkierungsleuchte, Umrissleuchte und/oder Fahrtrichtungsanzeige aufweisen. Wie eingangs bereits erwähnt, sind diverse derartige längsförmigen Beleuchtungseinrichtungen und deren Aufbau aus dem Stand der Technik bekannt.

Bei der Außenlichtanlage kann es sich gemäß der vorliegenden Erfindung jedoch um jede aus dem Stand der Technik bekannte Außenlichtanlage handeln, die für ein Fahrzeug geeignet ist. Diese kann auf, in oder unter der Oberfläche des Fahrzeugs (bei Kraftfahrzeugen bspw. der Außenkarosserie) angeordnet sein. Diesbezügliche Anordnungen und deren Realisierung sind dem Fachmann bekannt.

Bei dem Fahrzeug gemäß der vorliegenden Erfindung kann in vorteilhafter Weise die Anzeigeeinrichtung im Sichtbereich eines Fahrers des Fahrzeugs angeordnet sein und wenigstens einen Bildschirm aufweisen, der auswählbar ist aus Flüssigkristall-, Dünnschichttransistor-, OLED- und Plasma-Bildschirm.

Von der vorliegenden Erfindung sind auch alle Verfahren umfasst, die sich für einen Fachmann aus der Beschreibung des Fahrzeugs, seiner Komponenten, deren Funktionsweise und Zusammenwirken, aus der Beschreibung der Figuren, den Figuren sowie den beschriebenen Ausführungsbeispielen ohne weiteres ergeben.

Soweit in der vorliegenden Anmeldung davon gesprochen wird, dass das Fahrzeug "ein" Element, "eine" Einrichtung, etc. aufweist, so ist darunter stets "wenigstens eine" zu verstehen, sofern sich aus dem Kontext der vorliegenden Anmeldung nicht ausdrücklich etwas anderes ergibt. So kann das Fahrzeug bspw. mehrere Kameraeinrichtungen (mit jeweils ein oder mehreren Kameras) aufweisen, und/oder mehrere Außenlichtanlagen, die jeweils eine oder mehrere Halbleiterlichtquellen aufweisen. Weist die Außenlichtanlage mehrere Halbleiterlichtquellen auf, so werden diese bevorzugt mit dem gleichen Takt angesteuert. Auch kann das Fahrzeug mehrere, gegebenenfalls technisch unterschiedliche Anzeigeeinrichtungen aufweisen, die bevorzugt im Sichtbereich eines Fahrzeugführers und im Innenraum des Fahrzeugs angeordnet sind.

Die vorliegende Erfindung wird anhand der beigefügten Zeichnungen näher erläutert.

Dabei zeigen:
- Fig. 1: ein schematisches Beispiel für das Fahrzeug gemäß der vorliegenden Erfindung;
- Fig. 2: ein erstes Beispiel für eine getaktete Ansteuerung der Halbleiterlichtquelle und eine dazu synchrone Aufnahme von Bildern;
- Fig. 3: ein zweites Beispiel für eine getaktete Ansteuerung der Halbleiterlichtquelle und eine dazu synchrone Aufnahme von Bildern;
- Fig. 4: ein drittes Beispiel für eine getaktete Ansteuerung der Halbleiterlichtquelle und eine dazu synchrone Aufnahme von Bildern.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die in der obigen Beschreibung genannten Merkmale und Merkmalskombinationen sowie die in der nachfolgenden Beschreibung von Ausführungsformen, Ausführungsbeispielen und der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der vorliegenden Erfindung zu verlassen.

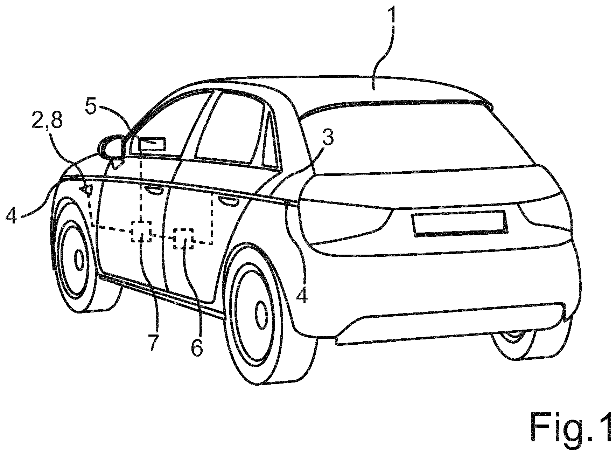

Wie in Fig. 1 schematisch und beispielhaft dargestellt ist, weist das Fahrzeug 1 gemäß der vorliegenden Erfindung eine Kameraeinrichtung 2 zur Erfassung von Bildern in zeitlicher Abfolge von einem Bereich einer Fahrzeugumgebung, eine fahrzeugseitige Außenlichtanlage 3, deren lichtabstrahlender Teil zumindest teilweise von der Kameraeinrichtung 2 erfasst wird und die eine Halbleiterlichtquelle 4 aufweist, sowie eine Anzeigeeinrichtung 5 für die von der Kameraeinrichtung 2 erfassten Bilder auf.

Als Kameraeinrichtung 2 kann bspw. eine für sichtbares Licht (d.h. für Licht in einem Wellenlängenbereich von etwa 380 nm bis 780 nm) geeignete vorgesehen sein. Die Kameraeinrichtung 2 kann ergänzend oder alternativ hierzu bspw. aber auch eine sein, die für infrarotes Licht (d.h. für Licht in einem Wellenlängenbereich ab etwa 780 nm bis einschließlich 1 mm) geeignet ist.

Soweit in der vorliegenden Anmeldung davon gesprochen wird, dass Bilder "in zeitlicher Abfolge" aufgenommen werden oder aufgenommen werden können, so ist darunter jede Aufnahmefrequenz zu verstehen, die den erfindungsgemäßen Zweck erfüllt. In der Regel empfindet ein Mensch eine Bildfolge ab etwa 15 Bildern pro Sekunden als bewegte Szene wahr. Daher kann gemäß der vorliegenden Erfindung eine Bildaufnahmefrequenz ab 15 Bildern pro Sekunde vorgesehen sein.

Da durch die Kameraeinrichtung 2 und die Anzeigeeinrichtung 5 einem Fahrer des Fahrzeugs 1 ein aktuelles Bild aus der erfassten Fahrzeugumgebung angezeigt werden soll, aus dem auch die jeweils aktuellen Veränderungen innerhalb der erfassten Fahrzeugumgebung erkennbar sein sollen, erscheint die genannte Bildaufnahmefrequenz auch unter diesem Gesichtspunkt als untere Grenze sinnvoll zu sein. Die Bildaufnahmefrequenz kann selbstverständlich auch höher sein, etwa 20 Bilder/s, 25 Bilder/s, 30 Bilder/s, 40 Bilder/s, 50 Bilder/s, 60 Bilder/s, etc.

Die Kameraeinrichtung 2 kann an jeder geeigneten Position an oder auf dem Fahrzeug 1 angeordnet sein. Bei dem in Fig. 1 dargestellten Beispiel ist die Kameraeinrichtung 2 im Bereich eines Kotflügels angeordnet. Die Kameraeinrichtung 2 kann selbstverständlich auch an einer oder mehreren anderen Position vorgesehen sein, etwa im Bereich einer Vordertür, der A-Säule, der B-Säule, der C-Säule, an/in der Front, am/im Heck, an/in einem Außenspiegel, am/im Dachbereich, etc. Aus aerodynamischen, gestalterischen und/oder Platzgründen kann es von Vorteil sein, wenn die Kameraeinrichtung 2 nicht aus der übrigen Silhouette des Fahrzeugs 1 hervorragt.

Das Fahrzeug 1 weist weiter eine der Außenlichtanlage 3 zugeordnete Halbleiterlichtquellen-Steuereinrichtung 6 auf, mittels der die Halbleiterlichtquelle 4 zur Lichtabstrahlung getaktet angesteuert wird. Von daher kann die Außenlichtanlage 3 eine jede Lichtfunktion aufweisen, die mittels einer getakteten Ansteuerung der Halbleiterlichtquelle 4 realisiert werden kann.

Der Kameraeinrichtung 2 ist eine Kamera-Steuereinrichtung 7 zugeordnet, die in kommunikativer Verbindung mit der Halbleiterlichtquellen-Steuereinrichtung 6 steht.

Die Kamera-Steuereinrichtung 7 ist gemäß einem Aspekt der vorliegenden Erfindung dazu eingerichtet, den Zeitpunkt und die Zeitdauer einer jeden Aufnahme eines Bildes der Kameraeinrichtung 2 in Abhängigkeit von wenigstens einem vorgegebenen oder vorgebbaren Parameter (wie etwa einem Fahrerwunsch oder einer Umgebungshelligkeit) derart zu steuern, dass bei einer eingeschalteten Außenlichtanlage 3 jede Aufnahme jedes Bildes synchron (d.h. in einer vorgebbaren Relation) zur Ansteuerung der Halbleiterlichtquelle 4 erfolgt.

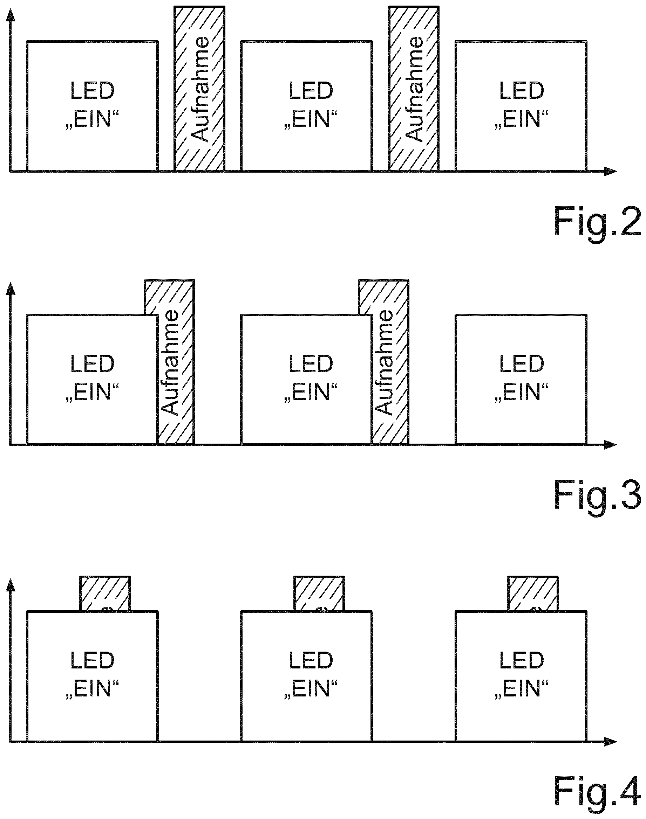

In den Figuren 2 bis 4 sind vier Beispiele für eine derartige synchrone Bildaufnahme schematisch dargestellt. Fig. 2 zeigt ein Beispiel, bei dem jede Aufnahme jedes Bildes während eines ausgeschalteten Zustands der Halbleiterlichtquelle 4 (hier am Beispiel einer LED) erfolgt. Hierdurch erscheint eine eingeschaltete Außenlichtanlage 3 in den erfassten Bildern als ausgeschaltet.

Fig. 3 zeigt ein Beispiel, bei dem ein erster vorgebbarer Anteil der Zeitdauer jeder Aufnahme jedes Bildes mit einem eingeschalteten Zustand und ein zweiter, vorgebbarer, restlicher Anteil der Zeitdauer jeder Aufnahme jedes Bildes mit einem ausgeschalteten Zustand der Halbleiterlichtquelle 4 zusammenfällt. Je nach dem vorgebbaren Verhältnis der einzelnen Anteile zueinander erscheint das Licht einer eingeschalteten Außenlichtanlage 3 in den erfassten Bildern als heller, gleichhell oder dunkler (gedimmt), als dies bei integrierter Betrachtung mit dem Auge der Fall ist. Soweit in der vorliegenden Anmeldung von einem "ersten Anteil" und einem "zweiten Anteil" gesprochen wird, ist es nicht zwingend, dass ein "erster Anteil" zeitlich vor einem "zweiten Anteil" liegt. Der "erste Anteil" kann daher auch zeitlich nach dem "zweiten Anteil" liegen.

Und Fig. 4 zeigt ein Beispiel, bei dem jede Aufnahme jedes Bildes während eines eingeschalteten Zustands der Halbleiterlichtquelle 4 erfolgt. Hierdurch erscheint das Licht einer eingeschalteten Außenlichtanlage 3 in den erfassten Bildern heller, als dies bei integrierter Betrachtung mit dem Auge der Fall ist.

Weitere, in den Figuren 2 bis 4 nicht dargestellte Beispiele zur - mit der getakteten Ansteuerung der Halbleiterlichtquelle 4 abgestimmten - Aufnahme von Bildern ist eine Aufnahme eines jedes Bildes zu einem Zeitpunkt und über eine vorgebbare Zeitdauer, bei der die Gesamtdauer der eingeschalteten Zustände der Halbleiterlichtquelle größer ist als die Gesamtdauer der ausgeschalteten Zustände der Halbleiterlichtquelle, oder die Aufnahme eines jedes Bildes zu einem Zeitpunkt und über eine vorgebbare Zeitdauer, bei der die Gesamtdauer der eingeschalteten Zustände der Halbleiterlichtquelle kleiner ist als die Gesamtdauer der ausgeschalteten Zustände der Halbleiterlichtquelle.

Bspw. kann bei einer symmetrisch getakteten Ansteuerung der Halbleiterlichtquelle, d.h. einer Taktung, bei der die Zeitdauer eines eingeschalteten Zustands genauso lang ist wie der ausgeschaltete Zustand, die Aufnahme eines Bildes ab einem Zeitpunkt beginnen und über eine solche Zeitdauer erfolgen, dass sich die Aufnahme über zwei eingeschaltete und einen ausgeschalteten Zustand oder über drei eingeschaltete und zwei ausgeschaltete Zustände erstreckt (d.h. die Gesamtdauer der eingeschalteten Zustände ist größer als die Gesamtdauer der ausgeschalteten Zustände). In ähnlicher Weise kann der Zeitpunkt und die Zeitdauer so gewählt werden, dass die Gesamtdauer der eingeschalteten Zustände kleiner ist als die Gesamtdauer der ausgeschalteten Zustände (bspw. zwei ausgeschaltete Zustände und ein eingeschalteter Zustand; drei ausgeschaltete Zustände und zwei eingeschalteter Zustände, etc.).

Soweit in der vorliegenden Anmeldung der Begriff "Fahrzeug" verwendet wird, ist darunter jede Art von Land-, Luft- und Wasser-Fahrzeug, schienen- und nicht schienengebundenem Fahrzeug, insbesondere aber ein Kraftfahrzeug zu verstehen.

Da einem Fachmann die für die vorliegende Anmeldung erforderlichen, geeigneten und hier erwähnten Vorrichtungen, Einrichtungen, Baugruppen, Elemente, Hard- und Software-Komponenten, etc. und deren mögliches Zusammenwirken (drahtlos, drahtgebunden, mittels eines Bussystems) bekannt sind, braucht hierauf nicht näher eingegangen zu werden. Auch ist einem Fachmann bekannt, wie die in der vorliegenden Anmeldung beschriebenen Verfahrensschritte durchgeführt werden können, so dass auch hierauf in der vorliegenden Anmeldung nicht näher eingegangen zu werden braucht.

## Patentansprüche

1. Fahrzeug (1) mit
- einer fahrzeugseitigen Außenlichtanlage (3), die eine Halbleiterlichtquelle (4) aufweist und der eine Halbleiterlichtquellen-Steuereinrichtung (6) zugeordnet ist, mittels der die Halbleiterlichtquelle (4) zur Lichtabstrahlung getaktet angesteuert wird,
- einer Kameraeinrichtung (2) zur Erfassung von Bildern in zeitlicher Abfolge von einem Bereich einer Fahrzeugumgebung, der eine Kamera-Steuereinrichtung (7) zugeordnet ist, die in kommunikativer Verbindung mit der Halbleiterlichtquellen-Steuereinrichtung (6) steht, sowie
- einer Anzeigeeinrichtung (5) für die von der Kameraeinrichtung (2) erfassten Bilder,
**dadurch gekennzeichnet, dass**
a) von der Kameraeinrichtung (2) der lichtabstrahlende Teil der fahrzeugseitigen Außenlichtanlage (3) zumindest teilweise erfasst wird, und
b) die Kamera-Steuereinrichtung (7) dazu eingerichtet ist,
b1) den Zeitpunkt und die Zeitdauer einer jeden Aufnahme eines Bildes der Kameraeinrichtung (2) in Abhängigkeit von einem Fahrerwunsch und/oder einer Umgebungshelligkeit im Bereich des Fahrzeugs (1) derart zu steuern, dass bei einer eingeschalteten Außenlichtanlage (3) jede Aufnahme jedes Bildes derart synchron zur Ansteuerung der Halbleiterlichtquelle (4) erfolgt, dass
- jede Aufnahme jedes Bildes während eines eingeschalteten Zustands der Halbleiterlichtquelle (4) erfolgt, so dass das Licht des von der Kameraeinrichtung (2) erfassten, lichtabstrahlenden Teils der Außenlichtanlage (3) in den an die Anzeigeeinrichtung (5) übertragenen Bildern heller erscheint, als dies bei integrierter Betrachtung mit dem Auge der Fall ist; oder
- jede Aufnahme jedes Bildes während eines ausgeschalteten Zustands der Halbleiterlichtquelle (4) erfolgt, so dass die Außenlichtanlage (3) in den auf die Anzeigeeinrichtung (5) übertragenen Bildern als ausgeschaltete Außenlichtanlage (3) erscheint; oder
- ein erster vorgebbarer Anteil der Zeitdauer jeder Aufnahme jedes Bildes mit einem eingeschalteten Zustand und ein zweiter, vorgebbarer, restlicher Anteil der Zeitdauer jeder Aufnahme jedes Bildes mit einem ausgeschalteten Zustand der Halbleiterlichtquelle (4) zusammenfällt, so dass das Licht des von der Kameraeinrichtung (2) erfassten, lichtabstrahlenden Teils der Außenlichtanlage (3) in den an die Anzeigeeinrichtung (5) übertragenen Bildern gleich hell erscheint, wie dies bei integrierter Betrachtung mit dem Auge der Fall ist; oder
- jede Aufnahme jedes Bildes zu einem vorgebbaren Zeitpunkt beginnt und über eine vorgebbare Zeitdauer erfolgt, bei der die Gesamtdauer der eingeschalteten Zustände der Halbleiterlichtquelle (4) größer ist als die Gesamtdauer der ausgeschalteten Zustände der Halbleiterlichtquelle (4), so dass das Licht des von der Kameraeinrichtung (2) erfassten, lichtabstrahlenden Teils der Außenlichtanlage (3) in den an die Anzeigeeinrichtung (5) übertragenen Bildern heller erscheint, als dies bei integrierter Betrachtung mit dem Auge der Fall ist; oder
- jede Aufnahme jedes Bildes zu einem vorgebbaren Zeitpunkt beginnt und über eine vorgebbare Zeitdauer erfolgt, bei der die Gesamtdauer der eingeschalteten Zustände der Halbleiterlichtquelle (4) kleiner ist als die Gesamtdauer der ausgeschalteten Zustände der Halbleiterlichtquelle (4), so dass das Licht des von der Kameraeinrichtung (2) erfassten, lichtabstrahlenden Teils der Außenlichtanlage (3) in den an die Anzeigeeinrichtung (5) übertragenen Bildern dunkler erscheint, als dies bei integrierter Betrachtung mit dem Auge der Fall ist.

2. Fahrzeug (1) mit
- einer fahrzeugseitigen Außenlichtanlage (3), die eine Halbleiterlichtquelle (4) aufweist und der eine Halbleiterlichtquellen-Steuereinrichtung (6) zugeordnet ist, mittels der die Halbleiterlichtquelle (4) zur Lichtabstrahlung getaktet angesteuert wird,
- einer Kameraeinrichtung (2) zur Erfassung von Bildern in zeitlicher Abfolge von einem Bereich einer Fahrzeugumgebung, der eine Kamera-Steuereinrichtung (7) zugeordnet ist, die in kommunikativer Verbindung mit der Halbleiterlichtquellen-Steuereinrichtung (6) steht, sowie
- einer Anzeigeeinrichtung (5) für die von der Kameraeinrichtung (2) erfassten Bilder,
**dadurch gekennzeichnet, dass**
a) von der Kameraeinrichtung (2) der lichtabstrahlende Teil der fahrzeugseitigen Außenlichtanlage (3) zumindest teilweise erfasst wird, und
b) die Kamera-Steuereinrichtung (7) dazu eingerichtet ist,
b2) Bilder der Kameraeinrichtung (2) asynchron zum Takt der Ansteuerung der Halbleiterlichtquelle (4) zu erfassen und die Daten der Bilder der Kameraeinrichtung (2), die in einem eingeschalteten Zustand der wenigstens einen fahrzeugseitigen Außenlichtanlage (3) aufgenommen werden, auf Grundlage eines Fahrerwunsches und/oder der Umgebungshelligkeit im Bereich des Fahrzeugs (1) derart zu bearbeiten, dass in den an die Anzeigeeinrichtung (5) übertragenen bearbeiteten Bildern das Licht des von der Kameraeinrichtung (2) erfassten, lichtabstrahlenden Teils der fahrzeugseitigen Außenlichtanlage (3) heller, gleichhell oder dunkler erscheint, als bei einer integrierten Betrachtung mit einem menschlichen Auge, oder dass die Außenlichtanlage (3) als ausgeschaltete Außenlichtanlage (3) erscheint.

3. Fahrzeug (1) gemäß Anspruch 1 oder 2,
**dadurch gekennzeichnet, dass**
es eine Einrichtung (8) zur Erfassung einer Umgebungshelligkeit in einer Fahrzeugumgebung aufweist und die Kamera-Steuereinrichtung (7) dazu eingerichtet ist, die gegebene Umgebungshelligkeit in der Fahrzeugumgebung derart zu berücksichtigen, dass
c1) unterhalb einer ersten vorgebbaren Umgebungshelligkeit die Aufnahme ein jedes Bildes während eines ausgeschalteten Zustands der wenigstens einen Halbleiterlichtquelle (4) erfolgt, oder c2) in den an die Anzeigeeinrichtung (5) übertragenen bearbeiteten Bildern die wenigstens eine eingeschaltete, fahrzeugseitige Außenlichtanlage (3) als ausgeschaltete Außenlichtanlage (3) erscheint;
d1) ab der ersten vorgebbaren Umgebungshelligkeit und bis zu einer zweiten vorgebbaren Umgebungshelligkeit, die größer ist als die erste vorgebbare Umgebungshelligkeit, ein erster vorgebbarer Anteil der Zeitdauer jeder Aufnahme jedes Bildes mit einem eingeschalteten Zustand und ein zweiter, vorgebbarer, restlicher Anteil der Zeitdauer jeder Aufnahme jedes Bildes mit einem ausgeschalteten Zustand der wenigstens einen Halbleiterlichtquelle (4) zusammenfällt, oder d2) in den an die Anzeigeeinrichtung (5) übertragenen bearbeiteten Bildern das Licht des von der Kameraeinrichtung (2) erfassten, lichtabstrahlenden Teils der Außenlichtanlage (3) gleichhell oder dunkler erscheint, als bei einer integrierten Betrachtung mit einem menschlichen Auge; und
e1) ab der zweiten vorgebbaren Umgebungshelligkeit und einer Umgebungshelligkeit, die größer ist als die zweite vorgebbare Helligkeit, jede Aufnahme jedes Bildes während eines eingeschalteten Zustands der wenigstens einen Halbleiterlichtquelle (4) erfolgt, oder e2) in den an die Anzeigeeinrichtung (5) übertragenen bearbeiteten Bildern das Licht des von der Kameraeinrichtung (2) erfassten, lichtabstrahlenden Teils der Außenlichtanlage (3) heller erscheint, als bei einer integrierten Betrachtung mit einem menschlichen Auge.

4. Fahrzeug (1) gemäß einem der vorhergehenden Ansprüche,
**dadurch gekennzeichnet, dass**
- die Kamera-Steuereinrichtung (7) dazu eingerichtet ist, die Kameraeinrichtung (2) derart zu steuern, dass diese alternierend überbelichtete und unterbelichtete Bilder von dem Bereich in der Fahrzeugumgebung erfasst, und
- die Kamera-Steuereinrichtung (7) weiter dazu eingerichtet ist, jeweils zwei der alternierend aufgenommenen Bilder zu einem gemeinsamen Bild derart zusammenzufügen, dass sich in dem gemeinsamen Bild im Vergleich zu einem einzelnen, korrekt belichteten Bild ein erhöhter Dynamikumfang ergibt.

5. Fahrzeug (1) gemäß einem der vorhergehenden Ansprüche,
**dadurch gekennzeichnet, dass**
mittels der Kameraeinrichtung (2) ein Bereich in der Fahrzeugumgebung erfassbar ist, der sich seitlich und seitlich-rückwärtig in Bezug auf das Fahrzeug (1) erstreckt.

6. Fahrzeug (1) gemäß einem der vorhergehenden Ansprüche,
**dadurch gekennzeichnet, dass**
die Halbleiterlichtquellen-Steuereinrichtung (6) dazu eingerichtet ist, die Halbleiterlichtquelle (4) mittels einer Pulslängenmodulation anzusteuern.

7. Fahrzeug (1) gemäß einem der vorhergehenden Ansprüche,
**dadurch gekennzeichnet, dass**
die Halbleiterlichtquelle (4) der fahrzeugseitigen Außenlichtanlage (3) eine oder mehrere Lichtemittierende Dioden, eine oder mehrere RGB-Dioden und/oder eine oder mehrere Laserdioden aufweist.

8. Fahrzeug (1) gemäß einem der vorhergehenden Ansprüche,
**dadurch gekennzeichnet, dass**
die fahrzeugseitige Außenlichtanlage (3) eine längsförmige Beleuchtungseinrichtung ist und/oder die Funktion einer Seitenmarkierungsleuchte, Umrissleuchte und/oder Fahrtrichtungsanzeige aufweist.

9. Fahrzeug (1) gemäß einem der vorhergehenden Ansprüche,
**dadurch gekennzeichnet, dass**
die Anzeigeeinrichtung (5) im Sichtbereich eines Fahrers des Fahrzeugs (1) angeordnet ist und wenigstens einen Bildschirm aufweist, der auswählbar ist aus Flüssigkristall-, Dünnschichttransistor-, OLED- und Plasma-Bildschirm.

## Claims

1. Vehicle (1) with
- a vehicle external light unit (3), which comprises a semiconductor light source (4) and with which is associated a semiconductor light source control device (6), by means of which the semiconductor light source (4) is controlled in a pulsed manner for the light emission,
- a camera device (2) for taking images in a time sequence of a region of a vehicle environment with which a camera control device (7) is associated, which is in communicative connection with the semiconductor light source control device (6), as well as
- a display device (5) for the images taken by the camera device (2),
**characterised in that**
a) the light-emitting part of the vehicle external light unit (3) is at least partially captured by the camera device (2), and
b) the camera control device (7) is designed in order,
b1) to control the timing and the duration of each recording of an image of the camera device (2) depending on a driver's wish and/or an ambient brightness in the region of the vehicle (1), in such a way that when the external light unit (3) is switched on each recording of each image takes place synchronously with the control of the semiconductor light source (4), that
- each recording of each image takes place during a switched-on state of the semiconductor light source (4), so that the light of the light-emitting part of the external light unit (3) captured by the camera device (2) appears brighter in the images transmitted to the display device (5) than is the case with an integrated view with the human eye; or
- each recording of each image takes place during a switched-off state of the semiconductor light source (4), so that the external light unit (3) appears as a switched-off external light unit (3) in the images transmitted to the display device (5); or
- a first predeterminable portion of the duration of each recording of each image coincides with a switched-on state, and a second, predeterminable remaining portion of the duration of each recording of each image coincides with a switched-off state of the semiconductor light source (4), so that the light of the light-emitting part of the external light source (3) captured by the camera device (2) appears equally bright in the images transmitted to the display device (5), as is the case in an integrated view with human the eye; or
- each recording of each image starts at a predeterminable time and takes place over a predeterminable duration, in which the overall duration of the switched-on states of the semiconductor light source (4) is greater than the overall duration of the switched-off states of the semiconductor light source (4), so that the light of the light-emitting part of the external light source (3) captured by the camera device (2) appears brighter in the images transmitted to the display device (5) than is the case in an integrated view with the human eye; or
- each recording of each images starts at a predeterminable time and takes place over a predeterminable duration, in which the overall duration of the switched-on states of the semiconductor light source (4) is less than the overall duration of the switched off states of the semiconductor light source (4), so that the light of the light-emitting part of the external light source (3) captured by the camera device (2) appears darker in the images transmitted to the display device (5) than in an integrated view with the human eye.

2. Vehicle (1) with
- a vehicle external light unit (3), which comprises a semiconductor light source (4) and with which is associated a semiconductor light source control device (6), by means of which the semiconductor light source (4) is controlled in a pulsed manner for the light emission,
- a camera device (2) for taking images in a time sequence from a region of a vehicle environment with which a camera control device (7) is associated, which is in communicative connection with the semiconductor light source control device (6), as well as
- a display device (5) for the images taken by the camera device (2),
**characterised in that**
a) the light-emitting part of the vehicle external light unit (3) is at least partially captured by the camera device (2), and
b) the camera control device (7) is designed in order,
b2) to capture images of the camera device (2) asynchronously to the pulsing of the control of the semiconductor source (4) and to process the data of the images of the camera device (2), which are recorded in a switched-on stated of the at least one vehicle external light source (3), based on a driver's wish and/or the ambient brightness in the region of the vehicle (1), in such a way that in the processed images transmitted to the display device (5) the light of the light-emitting part of the vehicle external light unit (3) captured by the camera device (2) appears brighter, equally bright or darker than in an integrated view with a human eye, or that the external light source (3) appears as a switched-off external light source (3).

3. Vehicle (1) according to claim 1 or 2,
**characterised in that**
it comprises a device (8) for detecting an ambient brightness in a vehicle environment and the camera control device (7) is designed in order to take into account the given ambient brightness in the vehicle environment, in such a way that
c1) below a first predeterminable ambient brightness the recording of each image takes place during a switched-off state of the at least one semiconductor source (4), or
c2) in the processed images transmitted to the display device (5) the at least one switched-on vehicle external light unit (3) appears as a switched-off external light unit (3);
d1) starting from the first predeterminable ambient brightness and up to a second predeterminable ambient brightness, which is greater than the first predeterminable ambient brightness, a first predeterminable portion of the duration of each recording of each image coincides with a switched-on state, and a second, predeterminable remaining portion of the duration of each recording of each image coincides with a switched-off state of the at least one semiconductor light source (4), or
d2) in the processed images transmitted to the display device (5) the light of the light-emitting part of the external light unit (3) captured by the camera device (2) appears equally bright or darker than in an integrated view with a human eye; and
e1) starting from the second predeterminable ambient brightness and an ambient brightness that is greater than the second predeterminable brightness, each recording of each image takes place during a switched-on state of the at least one semiconductor source (4), or
e2) in the processed images transmitted to the display device (5) the light of the light-emitting part of the external light unit (3) captured by the camera device (2) appears brighter than in an integrated observation with a human eye.

4. Vehicle (1) according to any one of the preceding clams,
**characterised in that**
- the camera control device (7) is designed so as to control the camera device (2) in such a way that this takes alternatingly over-illuminated and under-illuminated images of the region in the vehicle environment, and
- the camera control device (7) is further designed to conflate in each case two of the alternatingly taken images to form a joint image, in such a way that in the joint image there is an enhanced dynamic scope compared to an individual, correctly illuminated image.

5. Vehicle (1) according to any one of the preceding claims,
**characterised in that**
by means of the camera device (2) a region in the vehicle environment can be detected, which extends laterally and laterally-backwards in relation to the vehicle (1).

6. Vehicle (1) according to any one of the preceding claims,
**characterised in that**
the semiconductor light source control device (6) is designed so as to control he semiconductor light source (4) by means of a pulse length modulation.

7. Vehicle (1) according to any one of the preceding claims,
**characterised in that**
the semiconductor light source (4) of the vehicle external light unit (3) comprises one or more light-emitting diodes, one or more RGB diodes and/one or more laser diodes.

8. Vehicle (1) according to any one of the preceding claims,
**characterised in that**
the vehicle external light unit (3) is an elongated illumination device and/or has the function of a side marker lamp, n-outline marker lamp and/or direction indicator.

9. Vehicle (1) according to any one of the preceding claims,
**characterised in that**
the display device (5) is arranged in the field of view of a driver of the vehicle (1) and has at least one screen that can be selected from a liquid crystal, zin-layer transistor, OLED and plasma screen.

## Revendications

1. Véhicule (1) comprenant :
- une installation d'éclairage extérieur côté véhicule (3), qui présente une source de lumière à semi-conducteurs (4) et à laquelle est affecté un dispositif de commande (6) de la source de lumière à semi-conducteurs, au moyen duquel la source de lumière à semi-conducteurs (4) est commandée en cadence pour l'émission de lumière,
- un dispositif à caméra (2) pour capter des images en séquence chronologique d'une zone d'un environnement du véhicule, auquel est affecté un dispositif de commande de caméra (7) qui est en liaison de communication avec le dispositif de commande (6) de la source de lumière à semi-conducteurs, ainsi que
- un dispositif d'affichage (5) pour les images captées par le dispositif à caméra (2),
**caractérisé en ce que**
a) la partie émettrice de lumière de l'installation d'éclairage extérieur côté véhicule (3) est captée au moins en partie par le dispositif à caméra (2) et
b) le dispositif de commande de caméra (7) est conçu pour
b1) commander le moment et la durée d'une prise respective d'une image du dispositif à caméra (2) en fonction d'un souhait du conducteur et/ou d'une luminosité ambiante dans la zone du véhicule(1) en sorte que, dans une installation d'éclairage extérieur connectée (3), chaque prise de chaque image se fasse de manière synchrone avec la commande de la source de lumière à semi-conducteurs (4),
- chaque prise de chaque image se fait au cours d'un état connecté de la source de lumière à semi-conducteurs (4) de sorte que la lumière de la partie émettrice de lumière de l'installation d'éclairage extérieur (3) captée par le dispositif à caméra (2) apparaisse plus lumineuse dans les images transmises au dispositif d'affichage (5) que cela n'est le cas par observation intégrée avec l'oeil ; ou
- chaque prise de chaque image au cours d'un état déconnecté de la source de lumière à semi-conducteurs (4) se fait de sorte que l'installation d'éclairage extérieur (3) apparaisse dans les images transmises au dispositif d'affichage (5) comme une installation d'éclairage extérieur (3) déconnectée ; ou
- une première fraction prédéfinissable de la durée de chaque prise de chaque image coïncide avec un état connecté et une seconde fraction prédéfinissable restante de la durée de chaque prise de chaque image coïncide avec un état déconnecté de la source de lumière à semi-conducteurs (4) en sorte que la lumière de la partie émettrice de lumière de l'installation d'éclairage extérieur (3) captée par le dispositif à caméra (2) apparaisse dans les images transmises au dispositif d'affichage (5) avec la même luminosité que cela n'est le cas par observation intégrée avec l'oeil ; ou
- chaque prise de chaque image démarre à un moment prédéfinissable et se fait sur une durée prédéfinissable dans laquelle la durée totale des états connectés de la source de lumière à semi-conducteurs (4) est plus grande que la durée totale des états déconnectés de la source de lumière à semi-conducteurs (4) si bien que la lumière de la partie émettrice de lumière de l'installation d'éclairage extérieur (3) captée par le dispositif à caméra (2) apparaît dans les images transmises au dispositif d'affichage (5) plus lumineuse que cela n'est le cas en observation intégrée avec l'oeil ; ou
- chaque prise de chaque image démarre à un moment prédéfinissable et se fait sur une durée prédéfinissable dans laquelle la durée totale des états connectés de la source de lumière à semi-conducteurs (4) est plus petite que la durée totale des états connectés de la source de lumière à semi-conducteurs (4) si bien que la lumière de la partie émettrice de lumière de l'installation d'éclairage extérieur (3) captée par le dispositif à caméra (2) apparaît dans les images transmises au dispositif d'affichage (5) plus foncée que cela n'est le cas en observation intégrée avec l'oeil.

2. Véhicule (1) comprenant :
- une installation d'éclairage extérieur côté véhicule (3) qui présente une source de lumière à semi-conducteurs (4) et à laquelle est affecté un dispositif de commande (6) de la source de lumière à semi-conducteurs au moyen duquel la source de lumière à semi-conducteurs (4) est commandée en cadence pour l'émission de lumière,
- un dispositif à caméra (2) pour capter des images en séquence chronologique d'une zone d'un environnement du véhicule auquel est affecté un dispositif de commande de caméra (7) qui est en liaison de communication avec un dispositif de commande (6) de la source de lumière à semi-conducteurs, ainsi que
- un dispositif d'affichage (5) pour les images captées par le dispositif à caméra (2),
**caractérisé en ce que**
a) la partie émettrice de lumière de l'installation d'éclairage extérieur (3) est captée au moins en partie par le dispositif à caméra (2), et
b) le dispositif de commande de caméra (7) est aménagé pour
b2) capter des images du dispositif à caméra (2) de manière asynchrone avec la cadence de la commande de la source de lumière à semi-conducteurs (4) et traiter les données des images du dispositif à caméra (2) qui sont reçues dans un état connecté de l'au moins une installation d'éclairage extérieur côté véhicule (3), en raison d'un souhait du conducteur et/ou de la luminosité ambiante dans la zone du véhicule (1) en sorte que, dans les images traitées transmises au dispositif d'affichage (5), la lumière de la partie émettrice de lumière de l'installation d'éclairage extérieur (3) captée par le dispositif à caméra (2) apparaisse plus lumineuse, de même luminosité ou plus foncée que dans le cas d'une observation intégrée avec un oeil humain ou que l'installation d'éclairage extérieur (3) apparaisse comme installation d'éclairage extérieur déconnectée (3).

3. Véhicule (1) selon la revendication 1 ou 2,
**caractérisé en ce que**
il présente un dispositif (8) pour capter une luminosité ambiante dans un environnement du véhicule et le dispositif de commande de caméra (7) est réglé en sorte de tenir compte de la luminosité ambiante donnée dans l'environnement du véhicule en sorte que,
c1) en dessous d'une première luminosité ambiante prédéfinissable, la prise d'une image respective se fasse au cours d'un état connecté de l'au moins une source de lumière à semi-conducteurs (4) ou c2) que, dans les images traitées transmises au dispositif d'affichage (5), l'au moins une installation d'éclairage extérieur côté véhicule connectée (3) apparaisse comme une installation d'éclairage extérieur déconnectée (3) ;
d1) à partir de la première luminosité ambiante prédéfinissable et jusqu'à une seconde luminosité ambiante prédéfinissable, qui est plus grande que la première luminosité ambiante prédéfinissable, une première partie prédéfinissable de la durée de chaque prise de chaque image avec un état connecté et une seconde partie restante prédéfinissable de la durée de chaque prise de chaque image avec un état déconnecté de l'au moins une source de lumière à semi-conducteurs (4) coïncident ou d2) dans les images traitées transmises au dispositif d'affichage (5), la lumière de la partie émettrice de lumière de l'installation d'éclairage extérieur (3) captée par le dispositif à caméra (2) apparaît avec la même luminosité ou plus foncée que par observation intégrée avec un oeil humain ;
e1) à partir de la seconde luminosité ambiante prédéfinissable et d'une luminosité ambiante, qui est plus grande que la seconde luminosité prédéfinissable, chaque prise de chaque image se fait au cours d'un état connecté de l'au moins une source de lumière à semi-conducteurs (4) ou e2) dans les images traitées transmises au dispositif d'affichage (5), la lumière de la partie émettrice de lumière de l'installation d'éclairage extérieur (3) captée par le dispositif à caméra (2) apparaît plus lumineuse que par observation intégrée avec un oeil humain.

4. Véhicule (1) selon l'une quelconque des revendications précédentes, **caractérisé en ce que**
- le dispositif de commande de caméra (7) est conçu de manière à commander le dispositif à caméra (2) en sorte que celui-ci capte en alternance des images suréclairées et sous-éclairées de la zone de l'environnement du véhicule, et
- le dispositif de commande de caméra (7) est en outre conçu pour conjuguer respectivement deux des images prises en alternance en une image commune de manière à obtenir une configuration dynamique plus élevée dans l'image commune en comparaison d'une seule image correctement éclairée.

5. Véhicule (1) selon l'une quelconque des revendications précédentes,
**caractérisé en ce que**,
au moyen du dispositif à caméra (2), on peut capter une zone dans l'environnement du véhicule qui s'étend latéralement et latéralement à l'arrière par rapport au véhicule (1).

6. Véhicule (1) selon l'une quelconque des revendications précédentes,
**caractérisé en ce que**
le dispositif de commande de la source de lumière à semi-conducteurs (6) est conçu de manière à commander la source de lumière à semi-conducteurs (4) avec une modulation de longueur d'impulsion.

7. Véhicule (1) selon l'une quelconque des revendications précédentes,
**caractérisé en ce que**
la source de lumière à semi-conducteurs (4) de l'installation d'éclairage extérieur côté véhicule (3) présente une ou plusieurs diodes électroluminescentes, une ou plusieurs diodes RVB et/ou une ou plusieurs diodes à laser.

8. Véhicule (1) selon l'une quelconque des revendications précédentes,
**caractérisé en ce que**
l'installation d'éclairage extérieur côté véhicule (3) présente un dispositif d'éclairage allongé et/ou la fonction d'un feu de marquage latéral, d'un feu de contour et/ou d'un affichage de direction de marche.

9. Véhicule (1) selon l'une quelconque des revendications précédentes,
**caractérisé en ce que**
le dispositif d'affichage (5) est agencé dans la zone de vision d'un conducteur du véhicule (1) et présente au moins un écran qui peut être choisi parmi un écran à cristal liquide, un écran transistorisé à couche mince, un écran OLED et un écran au plasma.
